**Europäisches Patentamt**

(19) **European Patent Office**

**Office européen des brevets**

(11) Publication number : **0 339 168 B1**

(12) # EUROPEAN PATENT SPECIFICATION

(45) Date of publication of patent specification :
08.04.92 Bulletin 92/15

(51) Int. Cl.⁵ : **E03D 1/32,** E03D 5/092,
E03D 5/094, F16K 31/24

(21) Application number : **88500092.7**

(22) Date of filing : **06.10.88**

(54) Mechanism for the filling and emptying of the water tank of water closets.

(30) Priority : **28.04.88 ES 8801307**

(43) Date of publication of application :
**02.11.89 Bulletin 89/44**

(45) Publication of the grant of the patent :
**08.04.92 Bulletin 92/15**

(84) Designated Contracting States :
**AT BE CH DE FR GB IT LI NL SE**

(56) References cited :
**US-A- 3 982 556
US-A- 3 982 557
US-A- 4 196 482**

(73) Proprietor : **Garcia de Couto, Manuel
San Lorenzo de El Escorial Medinaceli, 35
Madrid (ES)**

(72) Inventor : **Garcia de Couto, Manuel
San Lorenzo de El Escorial Medinaceli, 35
Madrid (ES)**

(74) Representative : **Aymat Gonzalez, José Maria
AYMAT, S.L. Hortaleza, 37
E-28004 Madrid (ES)**

EP 0 339 168 B1

Jouve, 18, rue Saint-Denis, 75001 PARIS

## Description

The present invention relates to an improved mechanism for filling and emptying the water tank of water closets or toilets, and is arranged as a mechanical assembly located inside the tank operable from outside, so that emptying is obtained through the combined action of two chains transmitting the traction on the driving unit to the drain and water inlet valve systems.

The patent is thus framed within the field related to the mechanical devices acting as accesories in the industry of the sanitary appliances for their integration and assembly in situ being total or partially removable at any time.

The present state of the art, known to the applicant, assumes the existence of a variety of mechanisms of direct action of the driving handle over a lever that drives and moves vertically a spindle provided at its lower end with a preferably semi-spherical device of drain clogging, whilst the upper part of the spindle acts directly or by the action of a float on the water inlet mechanism, causing its opening progressively decreases during the tank filling.

An evolution over said conception is shown in the Spanish registration for patent of invention No. 8702493, applied for in the name of the same owner of this invention, and which meant a variation both in the system of movement of the drain mechanism, through pivoting and inclined pulling over the drain float and in the specific system for water inlet.

The present patent develops a mechanism that in any of the two alternatives, presenting a driving unit which actuates the two pulling chains 3. One of the pulling chains 3 makes to float the drain float 4 to open the water outlet of the tank on the basin of the water closet or toilet. This same action of the driving unit, by means of the other pulling chain 3, actuates simultaneously over the shaft 9 to incline it, and thus to take the valve 7 out of its closed position and to allow the entrance of a new liquid to the tank. Once the discharge of the water has over, over the drain float 4 stops floating and falls by gravity to close again the outlet of the water and so allowing a new filling of the tank. The filling continues being made until the continuous rise of the water level puts into floating the shaft float 10. First, this operation places the shaft 9 in the vertical position, and then vertically presses upwards so that the valve 7 closes the water inlet when the tank is full. A presure reducer 11 reduces the pressure of the liquid at the inlet when same arrives with an excess pressure. A check valve 12 prevents, in any case, the water existing at the tank to return to the supply network. A valve washer 13 is intended to receive the vertical fall of the check valve 12 so that between both parts it is attained a perfect closing when the matching conical surfaces of both parts couple each other.

For a better understanding of the object of the present invention, it is herewith enclosed a description of a series of drawings in which, schematieally, it has been represented a preferred and not limitative mode of embodiment of the mechanism in its two modalities of operation, including the sixteen sheets of drawings, the following:

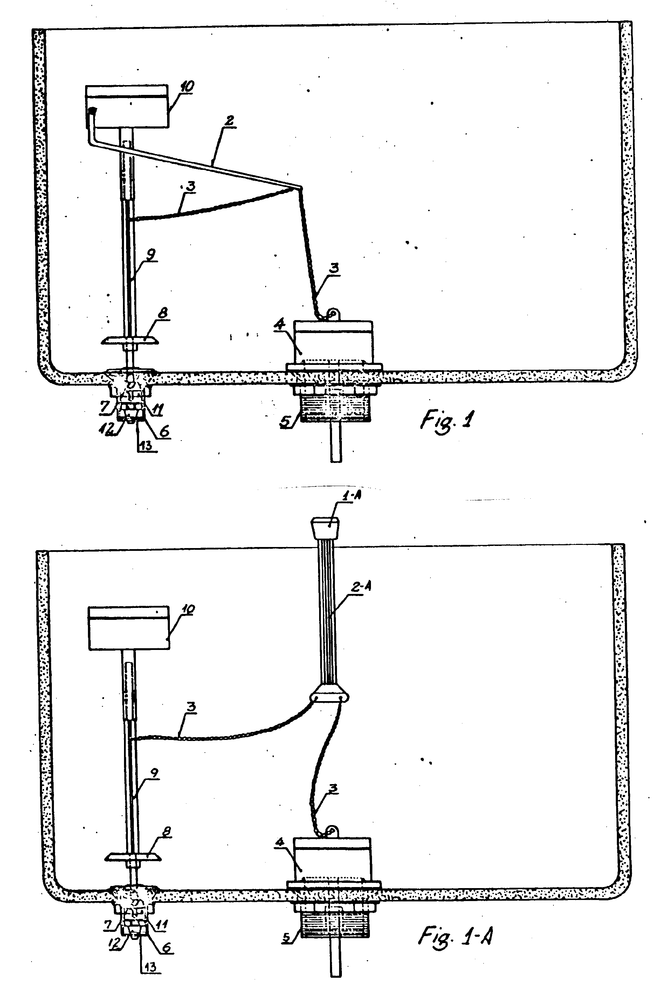

The figure 1 and figure 1A shows a longitudinal and vertical section of the water tank, where it is seen the mechanical assembly, fully mounted, in the normal working position in its two modalities of operation.

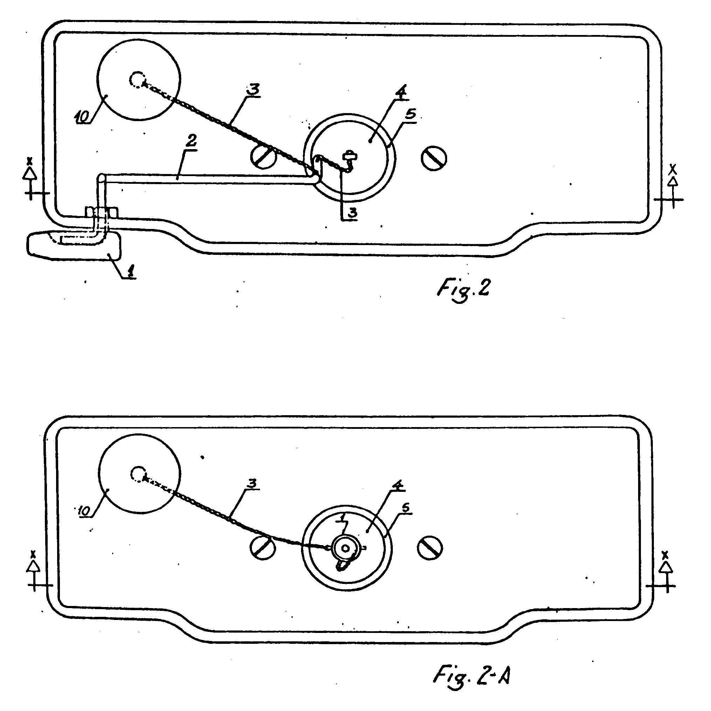

The figure 2 and figure 2A represents an upper view, where it is seen the mechanical assembly fully assembled in the normal working position in its two modalities of operation.

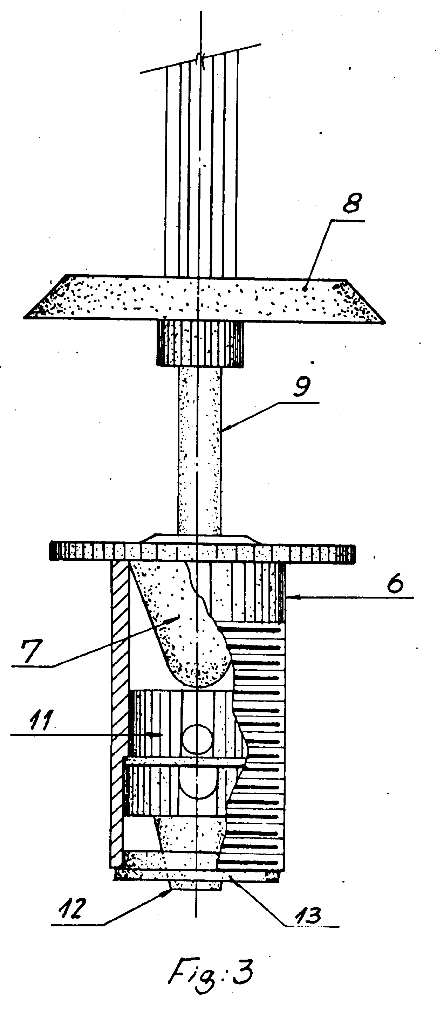

The figure 3 shows the assembly already assembled, of the water inlet system to the tank.

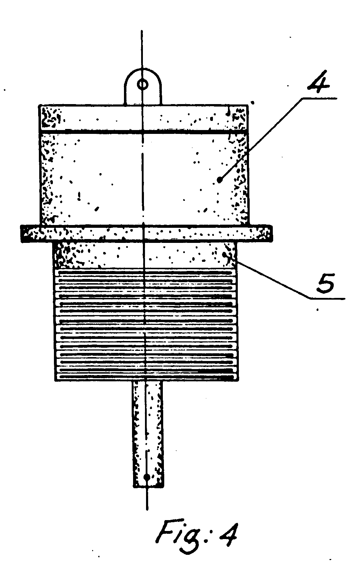

The figure 4 shows a view of the assembly that makes up the system of water discharge of the tank.

The figure 5 shows an upper view of the driving lever.

The figure 6 represents a side view of the same driving lever.

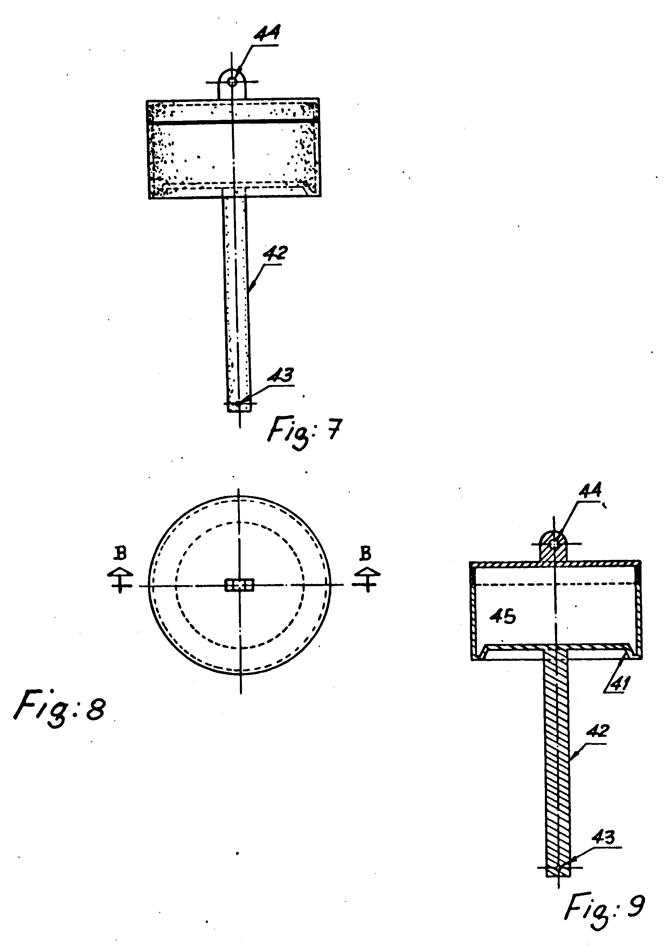

The figure 7 represents a general sode viwe of the drain float.

The figure 8 shows an upper view of the drain float.

The figure 9 shows a vertical section through the axle thereof.

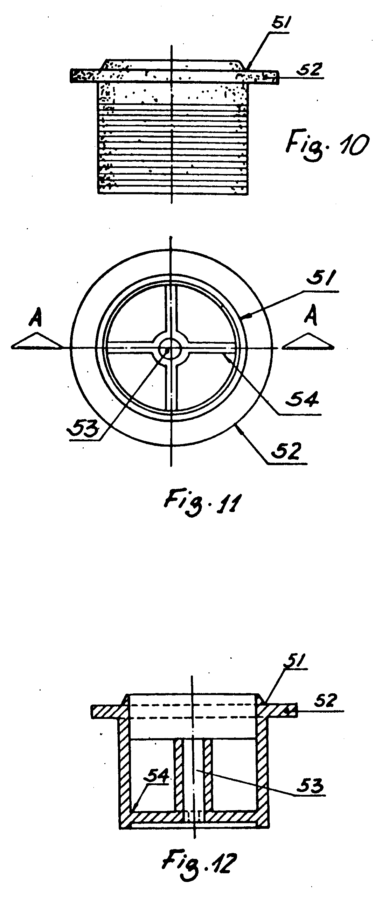

The figure 10 represents a general side view of the float base.

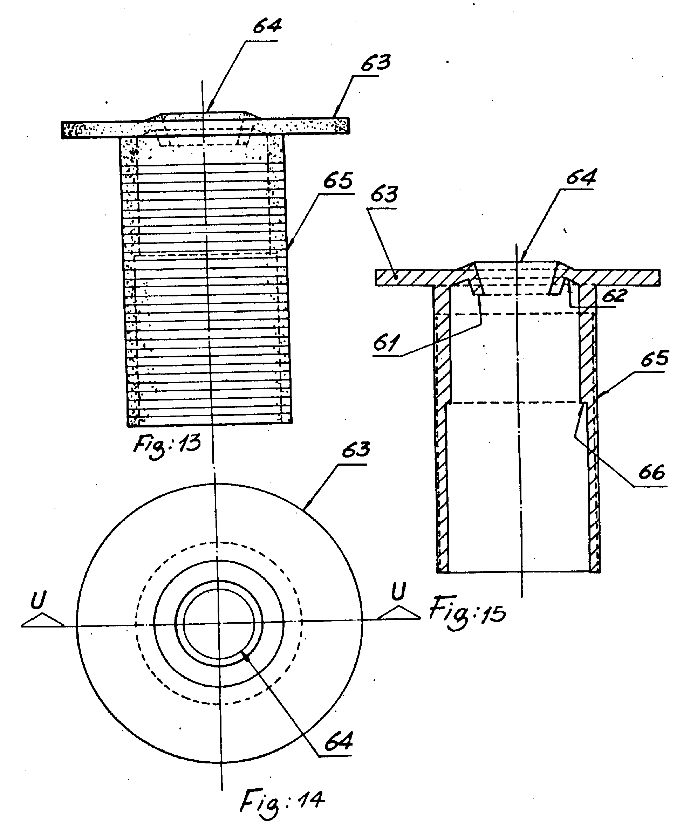

The figure 11 shows an upper view.

The figure 12 shows a vertical section through the axle thereof.

The figure 13 represents a general side view of the valve base.

The figure 14 shows an upper view of same.

The figure 15 shows a vertical section through the axle thereof.

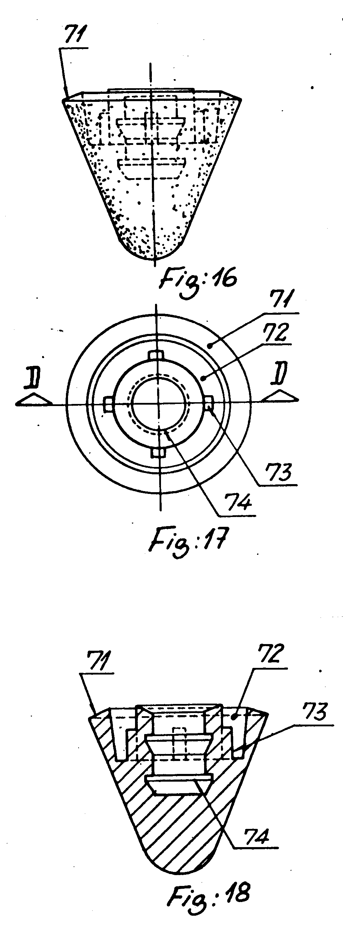

The figure 16 represents a general side view of the valve.

The figure 17 shows an upper view of the valve.

The figure 18 contains a vertical section through the axle thereof.

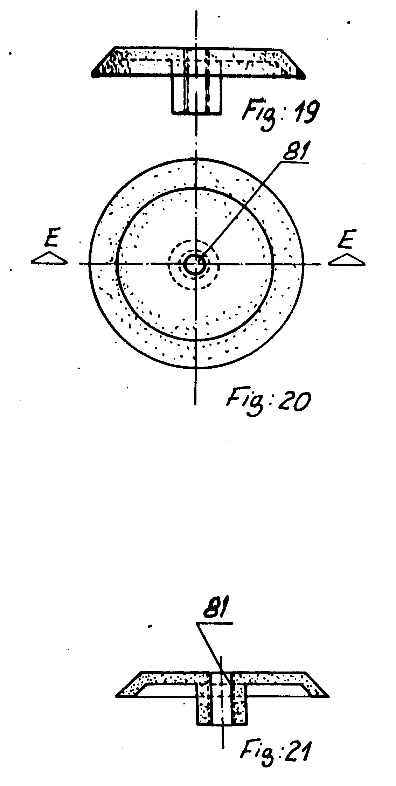

The figure 19 represents a general side view of the bell.

The figure 20 shows an upper view of the bell.

The figure 21 shows a vertical section through the axle thereof.

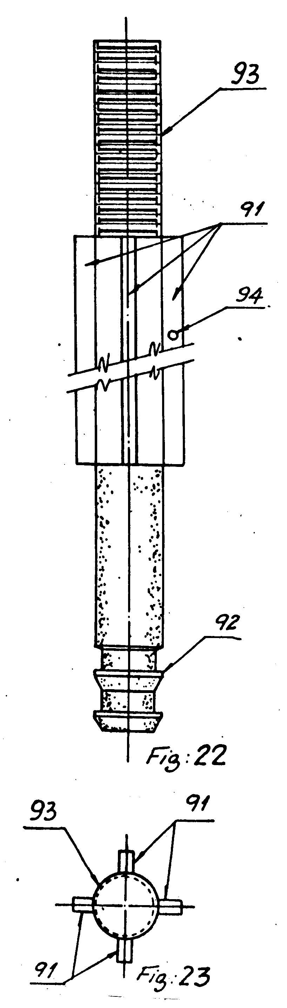

The figure 22 represents a general side view of the shaft.

The figure 23 contains an upper view of the shaft.

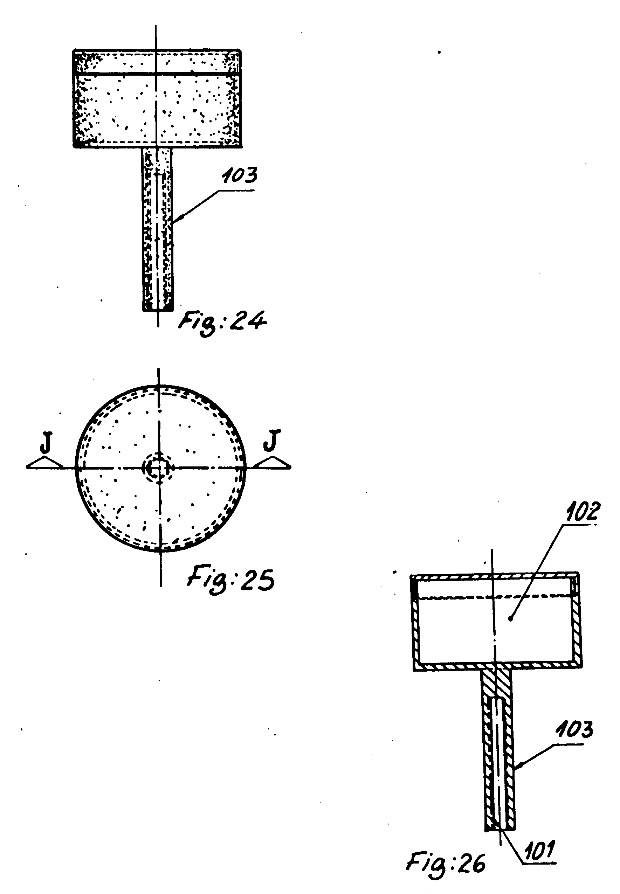

The figure 24 represents a general side view of the shaft float.

The figure 25 contains an upper view.

The figure 26 shows a vertical section through the axle thereof.

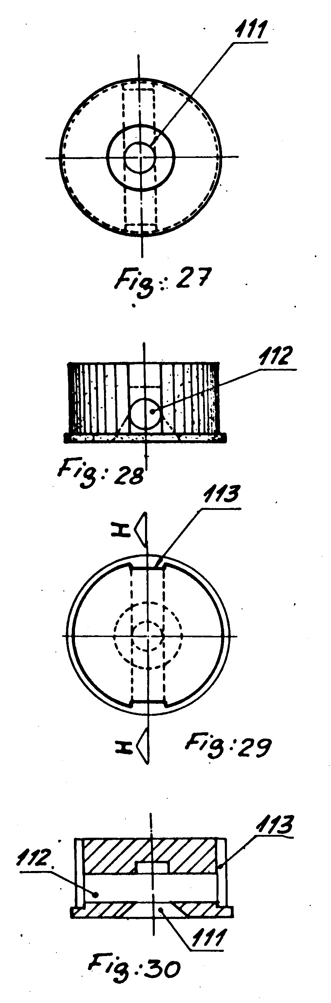

The figure 27 is a lower view of the pressure reducer.

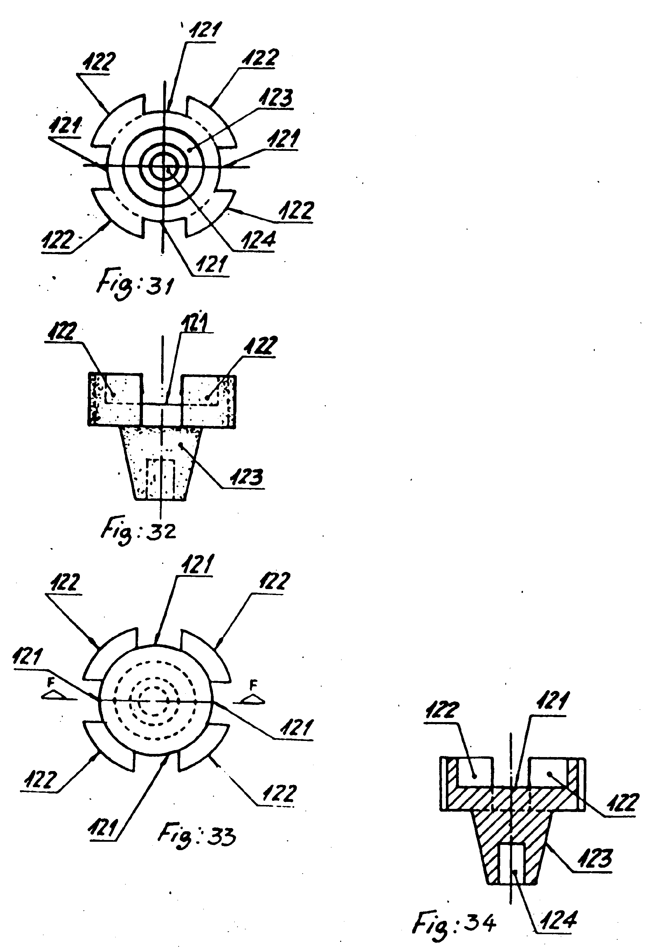

The figure 28 shows a side view.

The figure 29 shows a upper view.

The figure 30 shows a side section through the axle thereof.

The figure 31 represents a lower view of the check valve.

The figure 32 shows a general side view.

The figure 33 contains an upper view.

The figure 34 presents a vertical section through the axle thereof.

The figure 35 represents a diametral vertical section of the valve washer.

The figure 36 represents an upper view of the washer.

The figure 37 shows a lower view of the driving arm in the modality of operation A.

The figure 38 shows an upper view of the driving arm.

The figure 39 shows a side view of the driving arm.

The figure 40 shows a front general view of the driving arm thereof.

In accordance with the foregoing, it dealts with a mechanical assembly to control the filling and emptying of the water tank, intended to the cleaning operation of the toilet of water closet.

Is is a very simplified mechanism, with an efficient and safe operation.

It is composed of a few simple parts which, in correspondence with the devices in the respective drawing, are describe as follows:

The driving handle 1 is the only external element of the mechanism, which typically serves for the manual action of same. It has an adequate emptying to fix and anchor the end 25 of the drive lever 2.

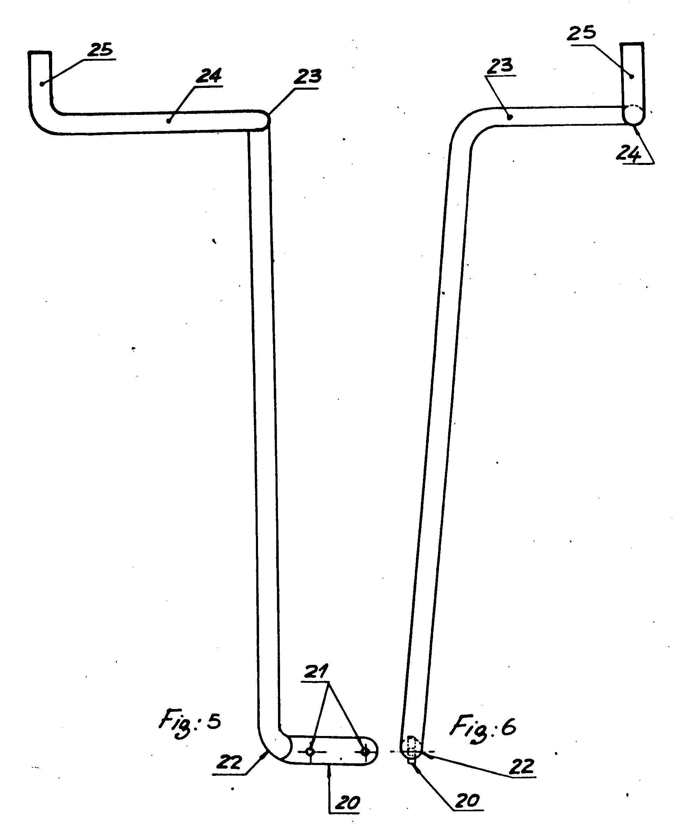

The driving lever 2 is a rod with four folds giving it the irregular undetermined shape which is shown in Figures 5 and 6. As from its upper end, straight and horizontal, there starts the end 25 which is introduced and fixed in the driving handle 1. Its shape is developing in the following way: When leaving the driving handle 1, the first fold at 90° on the horizontal plane is produced; afterwards it follows the straight and horizontal part 25; after this, these oecurs the second fold at 90°from horizontal to vertical, and then a vertical length 23 is produced after this there exists the third fold, slighty above 90° going from vertical to inclined and straight plane until arriving at the fourth and final fold 22, which is produced at 90° slightly inclined up to horizontal; finally the straight and horizontal length 20 of rectangular section provided with two holes 21 for the anchoring of the two pulling chains 3 ends.

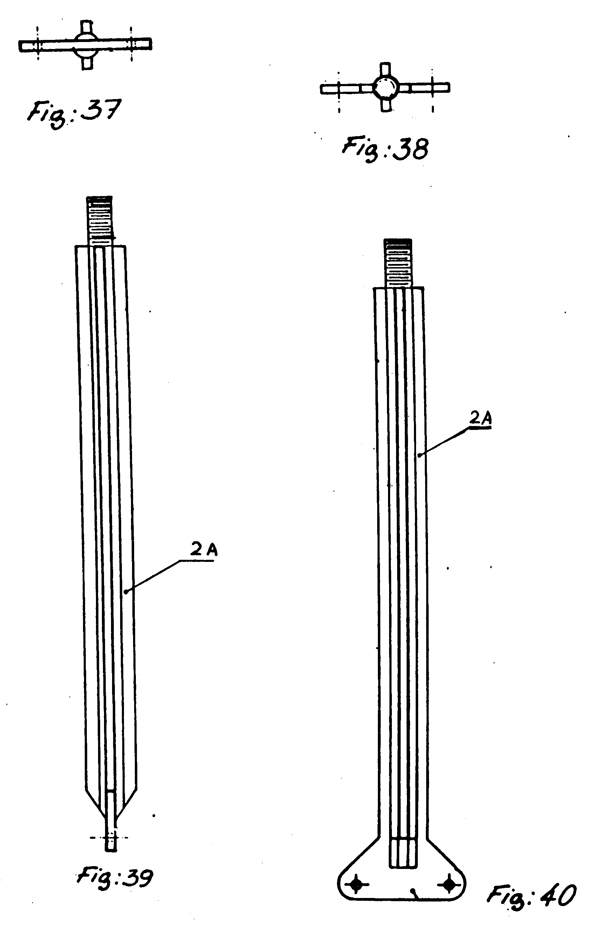

The driving arm 2A corresponding to the figures 37 to 40, is intended to the direct trasmission of the drive between the driving handle 1A ant the pulling chains 3. Its upper end is threaded to receive the anchoring of the driving handle 1A; its lower end is flat and provides with two holes for anchoring both pulling chains 3. In its central body, it is provided with four continuous and longitudinal protruding - reinforcements located diametrally opposite.

The drain float 4 is a floating unit. It is cylindrical and consists of an upper cover and a main lower body. The assembly of both parts wil be fixed and permanent, with a tight seal to keep empty of water the inner chamber 45. Centrally over the upper cover there is a protrusion 44 with a hole for fastening the pulling chain 3. Perimetrally over the lower external face of the chamber, it has a continuous edge, of triangular section 41 with an adequate conicity and coincident to attain the tight seal between this part 41 and the corresponding part 51 of the float base 5, which receives it in the position of drain closed. Centrally, in the external lower face of the chamber, the shaft quide 42 protrudes the lower end of which bears a transverse and - - through hole 43 for the placement of a stop-pin that hinders the whole assembly to leave its place of work.

The float base 5 is a cylindrical part fastened to the tank base at the discharge point. It has an external and lower threading to be fixed with a traditional nut. On its upper edge, there is and external protruding and surrounding peak 52 for seating and fastening stop. At its upper part, it has a protruding and continuous edge of triangular section 51 with adequate conicity and coincident to attain the tight seal between this portion 51 and the corresponding portion 41 of the drain float 4 when the assembly stays in position of "drain closed". At its lower and inner side it has a central and cylindrical guiding case 53 which is kept and which guiding case serves to drive the vertical movement of the shaft 42 of the drain float 4.

The valve base 6 is a cylindrical hollow (tube-shaped) part, which is fastened to the thank base at the place of "water inlet". It has a external lower threading 65 to be fixed with a traditional nut. In its upper edge it is provided with and external protruding and surrounding peak 63 for its seating and fastening stop. In the center of its upper edge there is a hole 64 having an inverted truncated cone shape, which circularwall is enlarged downwards, forming a ring 61 for stopping the entering water. Between the ring 61 and the main cylinder there is the circular and conical 62 seat on which is it attained the tight seal between this part 62 and the circular conical part 71 of the valve 7. The lower end of the valve base 6 is fully open and tube-shaped, and its external threading 65 is the one adequate for the universal connection to the water supply pipe. Inside the main cylindrical part, there occurs a chande of diameters which causes the circular offset 66 to serve as stop collar for the definitive position of the pressure reducer 11.

The valve 7 is a conical-shaped part. Its working position is reverse, with its apex downwards and slightly diminished spherically. Centrally in its upper face (cone base) it has a cylindrical cavity in different radius sectors to attain the protruding inner rings making up the stopping and closing fasteners 74 which ensure definitive anchoring of the end of the shaft 9. Concentrically at the upper face (cone base) there is an empty housing 71 at full circumference (360°) intended to receive the pressure water, impact arriving from the feeding pipe and keeps open the valve 7 during the tank filling time. In the perimeter of the upper face of the valve 7, in question, there is a conical surface 71 for the stopping and closing coincident with the circular and conical seat 62 of the valve base 6.

The bell is a disc with a shape similar to am umbrella. It has a central drilling 81 to fasten it to the shaft 9. it has an appropiate diameter to meet the water shock coming from the feeding pipe and thus to avoid any splashing or spill.

The shaft 9 it is a rod, threaded at its upper edge 93, to receive the anchoring of the shaft float 10. At its lower end, it has one or more protruding rings 92 configuring the stopping and closing fastener, fitted and fastened under pressure in its other corresponding rings 74 of the valve 7. Diametrally opposite there are four longitudinal reinforcements 91. In one of the protruding reinforcements 91 there is a hole 94 for the anchoring of one of the pulling chains 3. The shaft 9 in question, throught its lower end, receives the bell 8 which is fastened when abutting against the lower end of reinforcements 91.

The shaft float 10 is a cylindrial floating assembly, composed of an upper cover and a main lower body. The assembling between the parts will be fixed and permanent, with a tight seal to keep free of water the inner chamber 102. Centrally, on the lower external face of the chamber, a hollow shaft 103 protrudes with inner threading 101 where its anchoring with the shaft 9 is attained.

The pressure reducer 11 is a cap that is adjustedly fitted, fixed and permanent, within the valve base 6. This cap, so-called pressure reducer, has a cylindrical shape, with a ring protruding at its lower end serving as stop on the inner rebate 66 of the valve base 6 receiving it; said cap bears at its lower center a vertical rising hole, without reaching the upper end, where it remains blind (covered), the lower entrance of said hole is extended in the shape of cone 111. Another hole 112 is arranged horizontally and diametrally, with a total longitudinal passage which remains open on each of its two ends.

Over the external cylindrical surface of the pressure reducer cover and starting from each of the two ends of the horizontal hole 112 there is available a vertical rising channel 113 which reaches the upper end.

The operation or function of the pressure reducer cover, as its name indicates, is to reduce the pressure of the liquid coming from the feeding network when the pressure of arrival is excessive.

The check valve 12 is a part with its lower part in the inverted truncated cone shape 123 which, at its lower minor base has a central blind hole 124. The upper part of this part is formed by a circular base, with a diameter bigger than that of the upper base of the truncated cone part; this circular base is surrounded by four equal sectors of cylindrical wall 122 higher than the base, and which leave four free and alternate spaces 121 in the mode of merlons.

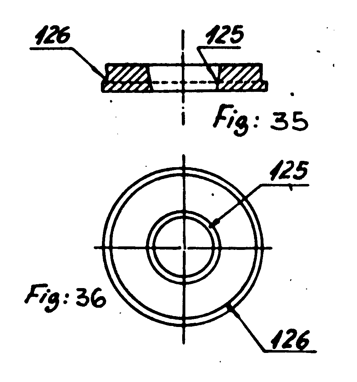

The valve washer 13 is a washer which contour is defines by two different diameters, which cause the perimetral rebate 126 of figure 35, which allows the fastening and stop over the lower end of the valve base 6. Its central hole is truncated cone shaped 125 and is coincident with the surface 123 of the check valve 12.

The mechanism thus conceived is susceptible for industrialización, and can be made through the machining of a series of assembling metal components, and other components (e.g. float) in lighter materials, conforming a series of elements which are mounted in the tank of the water closet once placed in its definitive location.

## Claims

1. Mechanism for filling and emptying the water tank of a water closet, made up basically of three main components for controlling the water inlet, for controlling the discharge thereof and the driving unit, characterized in that it has available a control unit for the water inlet to the tank, formed by a hollow valve base (6), fastened to the base of the tank, which at an inner upper space has a conical, spherical or cylindrical valve (7) which operates by inclination for sealing and unsealing the same, and which controls the passage of water to the tank, receiving at its upper face the axial connection of the shaft (9), both parts being joined by the anchorage attained under pressure, due to hooks or circular rings with counter-projections, being at an intermediate inner area of the valve base (6), and under the valve (7) is located adjustable and fixed, a pressure reducer (11), provided with holes and channels which allow the passage of water, but reduce its pressure when the same becomes excessive, having available at an internal lower area of the valve base (6) and under the pressure reducer (11), a check valve (12) with limited free vertical movement, located at a high position when the tank is in the filling process, or located at the low position to serve as a cap on the conical hole of the valve washer (13), thereby avoiding the return of the water from the tank to the supply network, the shaft (9) being fitted with am anti-splash bell (8) over which there is an anchorage hole for one of two pulling chains (3), comprising at its upper end a float or shaft float (10) to float, perpendicularly, the whole body as one with out motion, such that when reaching the water level required, it extends upwards, sealing the water inlet to the tank and thereby avoiding dripping or constant infiltration of excess water,

2. Mechanism for filling and emptying the water tank of water closets, as per claim 1, characterized in that the unit controlling the inlet or outlet of the tank water has available a float base (5) fastened to the base of the water tank, and for plugging the hole of the float base (5), there is a drain float (4) which fits in the float base (5) and opens, allowing the discharge of water for the claening of the basin, when the driving unit is actuated, drawing the pulling chains (3) and causing the lifting of the drain float (4),

3. Mechanism for filling and emptying the water tank of water closets, as per claim 1, characterized in that the driving unit presents two modalities; through hand lever (2) by actuating manually the driving handle (1) both the hand lever (2) and the two pulling chains (3) move simultaneously actuating and opening at the same time not only the inlet of water to the tank but also the outlet of the water from the tank on the basin of the water closet; and in its second modality a slight upward tration over the driving handle (1A) moves at the same time the driving arm (2A) and the two pulling chains (3) actuating and opening simultaneously not only the inlet of water to the tank but also the outlet of water on the basin of the water closet,

4. Mechanism for filling and emptying the water tank of water closets, as per claim 1, characterized in that the driving unit actuates two pulling chains (3), one of which floats the drain float (4) to open the outlet of the water from the tank on the basin of the water closer whilst the other pulling chain (3) actuates simultaneously on the shaft (9) to incline same, and thus taking the valve (7) out of its "closed" position and allowing the inlet again of new liquid to the tank; once the discharge of water has been concluded, the drain float (4) stops floating and falls by gravity, to close again the outlet of water, making it possible a new filling of the tank, that continues taking place until the continuous rising of the water level floats the the shaft float (10), which places first the shaft (9) in vertical position, and later on presses vertically upwards, so that the valve (7) closes the inlet of water the tank is full, having available a pressure reducer (11) which reduces and regulates the pressure of the liquid at the inlet when same reaches an excess presure, and a check valve (12) which hinders, in every case, that the water existing at the tank returns to the supply network, with a valve washer (13), to receive the vertical fallof the check valve (12), attaining between both parts the perfect sealing, due to the inbetween coupling of the conical matching surfaces of the two parts.

## Patentansprüche

1. Mechanismus zum Füllen und Leeren des Wassertanks einer Wassertoilette, grundlegend bestehend aus drei Hauptgruppen für die Kontrolle des einlaufenden Wassers, für die Kontrolle der Entleerung und der Schaltgruppe dadurch gekennzeichnet, dass ein Kontrollaggregat vorhanden ist für denden Eintritt des Wassers in den Spülkasten, gebildet aus einem --- hohlen Ventilsitz (6), befestigt an die Basis des Tanks oder Spülkastens, in dessen oberen Innenraum ein kegelförmiges, kugelförmiges oder zylindrisches Ventil vorhanden ist (7), welches die Bewegung durch - entsprechende Neigung zum Verschliessen und Offnen ausübt, den Zutritt von Wasser zum Spülkasten kontrolliert und auf der oberen Seite die axiale Befestigung der Achse (9) erfährt, sodass beide Teile durch die Verankerung verbunden bleiben, die durch Druck gemäss der Halterungen oder Rundringe mit Gegenausläufen zustande gekommen ist, wobei in der inneren Zwischenzone des Ventilsitzas (6) und unter dem Ventil (7), ein gepasst und fest der Druckminderer (11) untergebracht ist, versehen mit geeigneten Löchern und Kanälen, die das Passieren von Wasser gestatten jedoch unter Dämpfung des Druckes, wenn dieses übermässig anströmt, wobei in der unteren Innenzone des Ventilsitzes (6) und unter dem Druckminderer (11) ein den Rücklauf verhinderndes Ventil vorgesehen ist (12), mit einer senkrecht begrenzten freien Bewegung, um in die hohe Stellung zu gehen, wenn sich der Kasten in der Füllphase befindet oder in die Tiefstellung, um aufdem kegelförmigen Loch des Ventilringes (13) als Verschluss zu amtieren und den Rücklauf des Wassers aus dem Spülkasten in das Leitungsnetz zu veihindern, wobei sich die Achse (9) um eine Schirmkapsel (8) gegen Spritzer verlängert, auf der sich eine Verankerungsöffnung für eine der Zugketten (3) befindet und am anderen Ende eine Achsboje oder Schwimmer (10) vorhanden ist, um den gesamten verbundenen Körper spiellos in seiner senkrechten Form zum Schwimmen zu bringen, der, wenn die erforderliche Wasserhöhe erreicht ist, nach oben schiesst und den Zutritt des Wassers in den Kasten verschliesst und das Tröpfeln oder ständige Filtrierung von überschüssigem Wasser verhindert,

2. Mechanismus zum Füllen und Leeren des Wassertanks einer Wassertoilette, gemäss Anspruch 1, dadurch gekennzeichnet, dass das Kontrollaggregat für den Wasseraustritt bzw. die Entleerung des Kastens über eine Bojenbasis (5) verfügt, befestigt am Boden des Wasserkastens und die Öffnung der Bojenbasis (5) verschliessend, enthält sie die Abflussboje (4), die sich an die Bojenbasis (5) anschmiegt und sich öffnet, um die Spülkastenentleerung zur ermöglichen zum Spülen der Schüssel bei Betätigung des Schaltaggregates, das auf die Zugketten (3) wirkt und dadurch die Abflussboje hochgehen lässt (4),

3. Mechanismus zum Füllen und Leeren des Wassertanks einer Wassertoilette, gemäss Anspruch 1, dadurch gekennzeichnet, dass das Schaltaggregat zwei Möglichkeiten aufweist, mittels Handhebel (2), indem der Schalthebel (1) von Hand betätigt wird; dabei setzen sich gleichzeitig in Bewegung sowohl der Handhebel als auch die beiden Zugketten (3), die zu gliecher Zeit den Wassereinlauf zum Kasten wie auch die Entleerung des Kastens betätigen und öffnen, um die Schüssel zu späulen und die zweite Möglichkeit besteht in einem leichten Zishen nach oben am Ziehgriff (1A); abei setzen sich gleichzeitig in Bewegung der Hebelarm (2A) und die beiden Zugketten (3), die zu gleicher Zeit sowohl den Wasserzutritt zum Kasten als auch die Entleerung des Wassers in die Schüssel betätigen und --- öffnen.

4. Mechanismus zum Füllen und Leeren des Wassertanks einer Wassertoilette, gemäss Anspruch 1, dadurch gekennzeichnet, dass das Schaltaggregat zwei Zugketten betätigt (3); eine bringt die Abflussboje (4) zum Schwimmen, um die Entleerung des Wasseskastens in die Schüssel auszulösen, während die andere Zugkette (3) gleichzeitig auf die Achse (9) wirkt, um sie z neigen und so das Ventil (7) aus seiner Verschluss-Stellung herauszuholen und den Zutritt erneuten Wassers zum kasten zu gestatten; ist die Entleerung beendet, hört die Abflussboje (4) auf zu schwimmen und fällt durch ihr eigenes Gewicht um erneut den Wasseraustritt zu schliessen, wodurch ein erneutes Füllen des Spülkastens ermöglicht wirf; dieses - Füllen setzt ein, bis das ständige Ansteigen des Wasserspiegels den Achsschwimmer (10) zum Schwimmen bringt, wass zunächst die Achse (9) wieder in senkrechte Stellung bringt und sogleich drückt er senkrecht nach oben, damit das Ventil (7) den Wasserzulauf absperrt, da der - Kasten voll ist, wobei ein Druckminderer (11) vorgesehen ist, der den Druck der Flüssigkeit am Einlauf mindert und regelt, wenn besagte Flüssigkeit mit zu starkem Druck ankommt, ferner ein den Rücklauf verhinderndes Ventil (12), das auf jeden Fall verhindert, dass das im Kasten vorhandene Wasser zum Wassernetz zurückströmt, mit einer Ventilscheibe (13), um den senkrechten Fall des Ventile (12) aufzunehmen, sodass, - anhand beider Elemente der einwandfreie Verschluss erzielt wird, da die übereinstimmenden kegelförmigen Flächen der beiden Teils sich aneinanderfügen.

## Revendications

1. Mécanisme de remplissage et de vidage du réservoir de - la chase d'eau de water-closets comportant fondamentalement trois groupes principaux por le controle de l'arrivée de l'eau, pour le contrôle de la dècharge de celle-ci et le groupe de commande, se caractérisant en ce qu'il dispose d'un groupe de contrôle de l'entrée de l'eau dans le réservoir comportant un siège de soupape creux (6) qui est fixé à la base du réservoir et dans l'espace interne supérieur duquel se trouve une soupape (7) conique, sphérique ou cylindrique qui imprime le mouvement grâce à l'inclinaison appropriée pour l'obturation ou blocage et le déblocage de ladite soupape qui contrôle l'écoulement de l'eau dans le réservoir de la chasse d'eau et sur la face supérieure de laquelle est fixé axialement l'axe (9), ces deux pièces étant reliées par un ancrage exécuté à pression par des accrochages ou bagues circulaires à contre-sorties et se trouvant dans la zone interne intermédiaire du siège de la soupape (6), tandis qu'au-dessous de la soupape (7) se trouve en position ajustée et fixe le réducteur de pression (11) muni d'orifices et de cannelures permettant le passage d l'eau tout en en réduisant la pression quand celle-ci est excessive; dans la zone interne inférieure du siége de soupape (6) et au-dessous du réducteur de pression (11) se trouve un clapet anti retour (12) au mouvement libre vertical limité lui permettant de se situer en position élevée quand le réservoir de la chasse d'eau est en train de se remplir, ou en position basse pour faire fonction de bouchon sur l'orifice conique de la rondelle ou jonc d'arret (13) du clapet por éviter le refoulement de l'eau du réservoir au réseau, l'axe (9) se prolongeant par un capuchon-parapluie (8) anti-éclaboussant sur lequel est percé un orifice d'ancrage de l'une des chaînes de la chasee d'eau (3) et présentant à son extrémité supérieure une bouée ou flotteur à tige (10) pour faire flotter perpendiculairement tout le corps dans son ensemble et sans jeu et se déclenchant vers le haut quand le niveau d'eau requis est atteint, en bloquant l'entrée d'eau dans le reservoir de la chasse d'eau et en empêchant ainsi tout égouttement ou écoulement constant de l'eau en excédent,

2. Mécanisme de remplissage et de vidage du réservoir de la chasse d'eau de water-closets, selon la revendication 1, se caractérisant en ce que le groupe de contrôle de la sortie ou décharge de l'eau du réservoir dispose d'une base ou siège de bouée (5) fixée à la base de la chasse d'eau et d'une bouée de décharge ou d'écoulement (4) qui obture l'orifice de la base de bouée (5) en s'ajustant sur celle-ci et qui s'ouvre en permettant l'écoulement ou décharge de l'eau pour le nettoyage de water-closet en actionnant le groupe de commande qui tire les chaînes (3) de la chasse d'eau et fait remonter par le tirant la bouée de décharge (4),

3. Mécanisme de remplissage et de vidage du réservoir de la chasse d'eau de water-closets, selon la 1ère revendication, se caractérisant en ce que le groupe de commande présente deux variantes, la première variante consistant en une tige ou levier de commande (2) qui, en actionnant à la main la manette de commande (1), met en mouvement à la fois la tige ou levier de commande et les deux chaînes de la chasse d'eau (3), en actionnant et en ouvrant simultanément tant l'entrée d'eau dans le réservoir de la chasse d'eau que la décharge d'eau de la chasse d'eau dans la cuvette du water-closet, tandis que la seconde variante permet, en exerçant une lègère traction vers le haut dur la tirette de commande (1A), de mettre en meme temps en mouvement le bras de commande (2A) et les deux chaînes (3) de la chasse d'eau en actionnant et en ouvrant simultanément tant l'entrée de l'eau dans le réservoir de la chasse d'eau que la décharge ou déversement de l'eau de la chasse dans la cuvette du water-closet,

4. Mécanisme de remplissage et de vidage du réservoir de la chase d'eau de water-closets, selon la 1ére revendication, se caractérisant en ce que le groupe de commande actionne deux chaînes (3) de la chasse d'eau, l'une d'entre elles faisant flotter la bouée de décharge (4), pour permettre l'écoulement de l'eau du réservoir de la chasse d'eau dans la cuvette du water-closet, tandis que l'autre chaîne (3) agit simultanément sur l'axe (9) pour l'incliner en dégageant ainsi la soupape (7) de sa position fermée et en permettant l'entrée de nouveau liquide dans le réservoir de la chasse d'eau; lorsque l'eau s'est écoulée, la bouée (4) de décharge cesse de flotter et retombe sous l'effet de la gravité pour obturer de nouveau la sortie de l'eau en permettant un nouveau remplissage du réservoir de la chasse d'eau qui se poursuit jusqu'à ce que la remontée continue du niveau de l'eau fasse flotter à tige (10) lequel, d'une pat ramène l'axe (9) en position verticale, et inmèdiatement après exerce une pression verticale vers le haut pour que la soupape (7) obture l'entrée de l'eau quand le rèservoir de la chasse d'eau est plein, le réducteur de pression (11), comme son nom l'indique, réduit et règle la pression du liquide à l'entrée quand celui-ci arrive sous une pression excessive, tandis qu'un clapet de non-retour (12) empêche, en tout cas, que l'eau se trouvant dans le réservoir de la chasse d'eau puisse retourner au réseau, une rondelle ou jonc d'arrêt de soupape (13) recevant la chute verticale du clapet anti-retour (12) en assurant entre ces deux pièces une fermeture parfaite du fait d'accoupler les unes aux autres les surfaces coniques coincidantes des deux pièces.

Fig. 1

Fig. 1-A

Fig.2

Fig. 2-A

Fig. 3

Fig: 4

Fig.5

Fig.6

Fig: 7

Fig: 8

Fig: 9

51

52

Fig. 10

51

A    A

54

53

52

Fig. 11

51

52

54

53

Fig. 12

14

Fig. 13

Fig. 14

Fig. 15

71

Fig: 16

71
72

D          D

73

74

Fig: 17

71          72

73

74

Fig: 18

Fig: 19

81

E          E

Fig: 20

81

Fig: 21

Fig. 22

Fig. 23

_Fig:24_

_103_

_Fig:25_

J          J

_102_

_103_

_101_

_Fig:26_

19

*111*

*Fig : 27*

*112*

*Fig : 28*

*113*

Ⅰ

Ⅰ

*Fig : 29*

*113*

*112*

*111*

*Fig : 30*

20

Fig: 31

Fig: 32

Fig: 33

Fig: 34

21

126    125

Fig: 35

125

Fig: 36

126

Fig:37

Fig:38

2A

Fig:39

2A

Fig:40

23